# EUROPEAN PATENT APPLICATION

(11) **EP 4 117 070 A1**
(43) Date of publication of application: **11.01.2023**
(21) Application number: 22746299.1
(22) Date of filing: 28.01.2022
(51) Int. Cl.: H01M 10/04, H01M 50/105

(54) **BATTERY CELL MANUFACTURING DEVICE AND BATTERY CELL MANUFACTURING METHOD**

(30) Priority: 28.01.2021 KR 20210012232; 27.01.2022 KR 20220012372
(71) Applicant: LG Energy Solution, Ltd., Seoul 07335 (KR)
(72) Inventor: JANG, Seokho, Daejeon 34122 (KR)
(74) Representative: Goddar, Heinz J.
(86) International application number: PCT/KR2022/001631
(87) International publication number: WO 2022/164273

(57) **Abstract**

A battery cell manufacturing device according to one embodiment of the present disclosure is a battery cell manufacturing device comprising a battery case in which an electrode assembly and an electrolyte are incorporated, with a pocket part and a pre-sealing part being formed on the outer peripheral surface thereof, and the device including a jig for pressing the pocket part, wherein the jig includes a first jig located at the upper part and a second jig located at the lower part with respect to the pocket part, and wherein pressing and releasing of the first jig and the second jig to the pocket part are repeated at least once to press the pocket part.

## Description

### [TECHNICAL FIELD]

### Cross Citation with Related Application(s)

This application claims the benefit of Korean Patent Application No. 10-2021-0012232 filed on January 28, 2021 and Korean Patent Application No. 10-2022-0012372 filed on January 27, 2022 in the Korean Intellectual Property Office, the contents of which are incorporated herein by reference in their entirety.

The present disclosure relates to a battery cell manufacturing device and a battery cell manufacturing method, and more particularly, to a battery cell manufacturing device and a battery cell manufacturing method in which the amount of electrolyte loss is reduced and the quality is made uniform.

### [BACKGROUND]

Along with the technology development and increased demand for mobile devices, demand for secondary batteries as energy sources has been increasing rapidly. Among these secondary batteries, a lithium secondary battery having high energy density and a high voltage, a long cycle lifespan, and a low self-discharge rate is commercially available and widely used.

A pouch for a secondary battery is mainly used as an exterior material for packaging such a secondary battery. The pouch is generally a pouch film having a structure of an outer layer, an adhesive layer, an aluminum layer, an adhesive layer, and an inner layer. However, the pouch-type secondary battery may be damaged in various processes. As an example, there is a problem that a part of the electrolyte in the pouch is pushed out to the outer peripheral surface in the process of sealing the outer peripheral surface of the pouch after the electrode assembly is incorporated into the pouch.

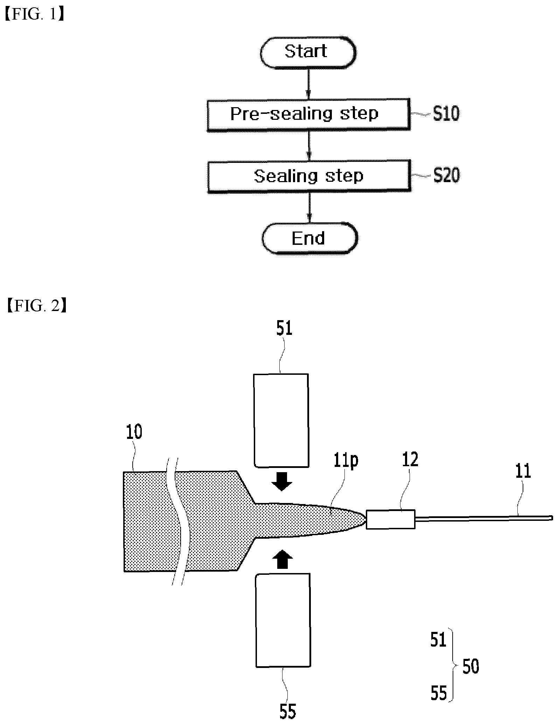

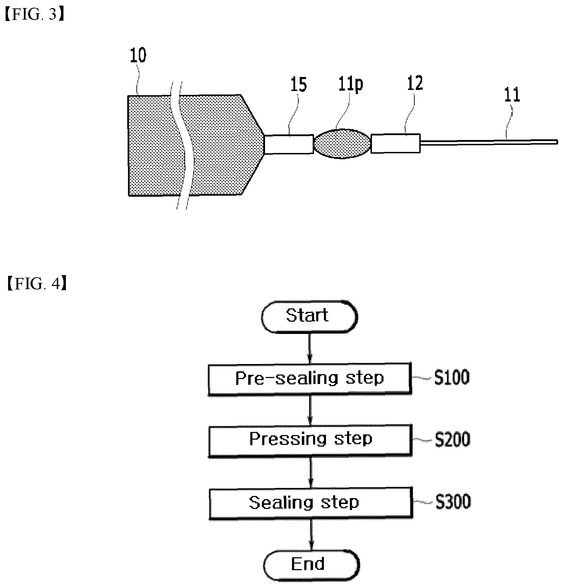

Fig. 1 is a flowchart showing a conventional battery cell manufacturing process. Fig. 2 is a diagram showing a battery cell after the pre-sealing step of Fig. 1. Fig. 3 is a diagram showing a battery cell after the sealing step of Fig. 1.

Referring to Fig. 1, the conventional battery cell manufacturing process includes a pre-sealing step (S10) and a sealing step (S20). Referring to Fig. 2, the pre-sealing step (S10) is a step of forming a pre-sealing part 12 at the end part of an outer peripheral surface 11 of a battery cell 10. Further, referring to Figs. 2 and 3, the sealing step (S20) is a step of forming the sealing part 15 on the outer peripheral surface 11 of the battery cell 10 by a first sealing tool 51 and a second sealing tool 55.

Here, the pre-sealing part 12 prevents a part of the electrolyte in the pouch from leaking to the outside before the sealing step (S20). However, by the pre-sealing step (S10), a pocket part 11p may be formed between the pre-sealing part 12 and the central part of the battery cell 10 on the outer peripheral surface 11 of the battery cell 10. In particular, a part of the electrolyte in the pouch may be contained in the pocket part 11p.

However, referring to Fig. 3, in the conventional battery cell manufacturing process, the sealing step (S20) is performed in a state in which the electrolyte in the pocket part 11p is not sufficiently removed, so that the electrolyte can remain in the pocket part 11p located between the pre-sealing part 12 and the sealing part 15. That is, there is a problem that a part of the electrolyte to be contained in the battery cell 10 may be lost, and the quality of the battery cell 10 is not made uniform. Therefore, there is a need to develop a battery cell manufacturing device and a battery cell manufacturing method in which the amount of electrolyte loss is reduced and the quality is made uniform.

### [DETAILED DESCRIPTION OF THE INVENTION]

### [Technical Problem]

It is an object of the present disclosure to provide a battery cell manufacturing device and a battery cell manufacturing method in which the amount of electrolyte loss is reduced and the quality is made uniform.

The objects of the present disclosure are not limited to the aforementioned objects, and other objects which are not described herein should be clearly understood by those skilled in the art from the following detailed description and the accompanying drawings.

### [Technical Solution]

According to one aspect of the present disclosure, there is provided a battery cell manufacturing device comprising a battery case in which an electrode assembly and an electrolyte are incorporated, with a pocket part and a pre-sealing part being formed on the outer peripheral surface of the battery case, and the device including a jig for pressing the pocket part, wherein the jig includes a first jig located at the upper part and a second jig located at the lower part with respect to the pocket part, and wherein pressing and releasing of the first jig and the second jig to the pocket part are repeated at least once to press the pocket part.

The jig may be extended along the pocket part.

A width of the jig may be equal to or smaller than a length of the pocket part.

At least one of the first jig and the second jig may have a surface in contact with the pocket part that is covered with a soft member.

The soft member may be formed of a POM (polyoxymethylene) pad.

The soft member bottom part facing the pocket part may have a structure in which the thickness changes.

The soft member bottom part has a first end part and a second end part, and the thickness of the soft member may decrease as it goes from the first end part adjacent to the pre-sealing part toward the second end part farther from the pre-sealing part relative to the first end part.

The battery cell manufacturing device further includes a sealing tool including a first sealing tool located at an upper part and a second sealing tool located at a lower part, with respect to the pocket part, wherein the sealing tool may heat-seal at least a part of the pocket part pressed by the jig to form a sealing part on the outer peripheral surface of the battery case.

A width of the sealing tool may be equal to or smaller than a length of the jig.

According to another aspect of the present disclosure, there is provided a battery cell manufacturing method comprising a battery case in which an electrode assembly and an electrolyte are incorporated, the method comprising: a pre-sealing step of forming a pocket part and a pre-sealing part on the outer peripheral surface of the battery case; and a pressing step of pressing and bonding the pocket part with a jig, wherein the jig includes a first jig located at the upper part and a second jig located at the lower part, with respect to the pocket part, and wherein in the pressing step, pressing and releasing of the first jig and the second jig to the pocket part may be repeated at least once.

The pressing step may be repeated until the thickness of the pocket part is similar to the thickness of the end part of the outer peripheral surface of the battery case.

The battery cell manufacturing method further includes a sealing step that is performed after the pressing step, wherein in the sealing step, at least a part of the pocket part may be heat-sealed by a sealing tool to form a sealing part on the outer peripheral surface of the battery case.

### [Advantageous Effects]

A battery cell manufacturing device and a battery cell manufacturing method according to an embodiment of the present disclosure presses the pocket part with a jig before sealing the pocket part formed on the outer peripheral surface of the battery case, thereby being able to reducing the amount of electrolyte loss and make the quality uniform.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a flowchart showing a conventional battery cell manufacturing process;
Fig. 2 is a diagram showing a battery cell after the pre-sealing step of Fig. 1;
Fig. 3 is a diagram showing a battery cell after the sealing step of Fig. 1;
Fig. 4 is a flowchart showing a battery cell manufacturing process according to an embodiment of the present disclosure;

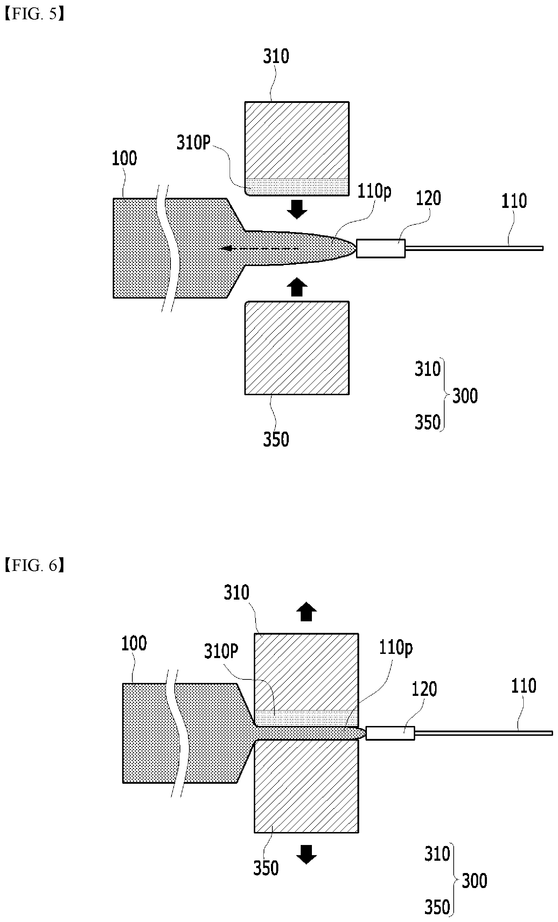

Fig. 5 is a diagram showing a battery cell after the pre-sealing step of Fig. 4;
Figs. 6 to 8 are diagrams each showing a battery cell in a process in which the pressing step of Fig. 4 is repeated;

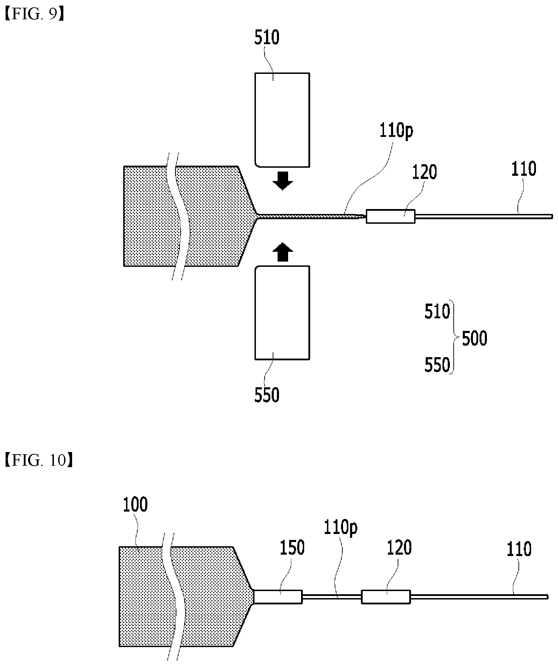

Fig. 9 is a diagram showing a battery cell after the pressing step of Fig. 4;
Fig. 10 is a diagram showing a battery cell after the sealing step of Fig. 4; and

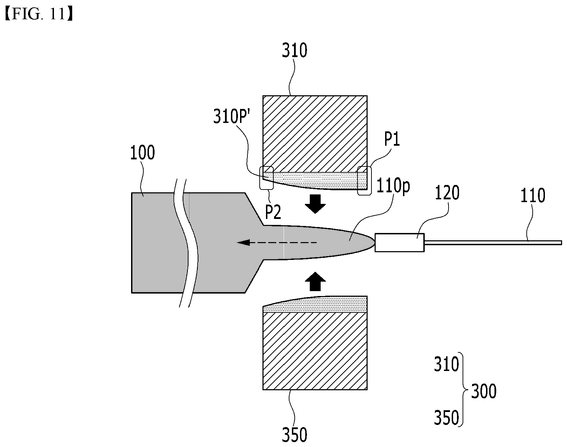

Fig. 11 is a diagram showing a modification of the battery cell manufacturing device shown in Fig. 5.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

A description of parts not related to the description will be omitted herein for clarity, and like reference numerals designate like elements throughout the description.

Further, throughout the description, when a portion is referred to as "including" a certain component, it means that the portion can further include other components, without excluding the other components, unless otherwise stated.

Fig. 4 is a flowchart showing a battery cell manufacturing process according to an embodiment of the present disclosure. Fig. 5 is a diagram showing a battery cell after the pre-sealing step of Fig. 4.0

Referring to Figs. 4 and 5, a battery cell manufacturing device according to an embodiment of the present disclosure is a battery cell manufacturing device comprising a battery case 100 in which an electrode assembly and an electrolyte are incorporated, with a pocket part 110p and a pre-sealing part 120 being formed on the outer peripheral surface 110 of the battery case 100, and the device including a jig 300 for pressing the pocket part 110p.

Here, the jig 300 includes a first jig 310 located at the upper part and a second jig 350 located at the lower part, with respect to the pocket part 110p. More specifically, the first jig 310 and the second jig 350 may be formed of the same material and shape. However, the present disclosure is not limited thereto, and can be appropriately deformed according to the shape of the battery case 100.

Additionally, the first jig 310 and the second jig 350 can each perform upward and downward movements. As another example, one of the first jig 310 and the second jig 350 is fixed in a state in contact with the pocket part 110p, and the remaining one can perform upward and downward movements. However, the present disclosure is not limited thereto, and can be appropriately deformed according to the shape of the battery case 100.

Further, the jig 300 may be extended along the pocket part 110p. In other words, the width of the jig 300 may be extended along the pocket part 110p. As an example, the width of the jig 300 may be equal to or smaller than the length of the pocket part 110p.

Thereby, in the battery cell manufacturing device according to an embodiment of the present disclosure, the jig 300 can relatively uniformly press the pocket part 110p, and the quality of the battery cell can be further improved.

Further, in the jig 300 of the present embodiment, at least one of the first jig 310 and the second jig 350 may have a surface in contact with the pocket part 110p that is covered with a soft member 310P. As an example, referring to Fig. 5, a surface of the first jig 310 in contact with the pocket part 110p may be covered with a soft member.

As an example, the soft member 310P may be formed of a POM (polyoxymethylene) pad. However, the soft member 310P is not limited thereto, and any material that can be sufficiently pressed without damaging the pocket part 110p can be applied.

Thereby, in the battery cell manufacturing device according to an embodiment of the present disclosure, a part of the jig 300 has a surface in contact with the pocket part 110p that is covered with a soft member 310P, whereby the pocket part 110p can be uniformly pressed without overlapping each other, and can prevent sealing defects such as wrinkles during sealing from occurring on a part of the pocket part 110p that is subsequently pressed.

Figs. 6 to 8 are diagrams each showing a battery cell in a process in which the pressing step of Fig. 4 is repeated.

In the jig 300 of the present embodiment, the first jig 310 and the second jig 350 can repeatedly press and release the pocket part 110p at least once to press the pocket part 110p. More specifically, referring to Fig. 5, the first jig 310 and the second jig 350 can each move toward the pocket part 110p. Further, referring to Fig. 6, the first jig 310 and the second jig 350 may be in contact with the pocket part 110p. Here, at least a part of the electrolyte contained in the pocket part 110p may move toward the inside of the battery case 100.

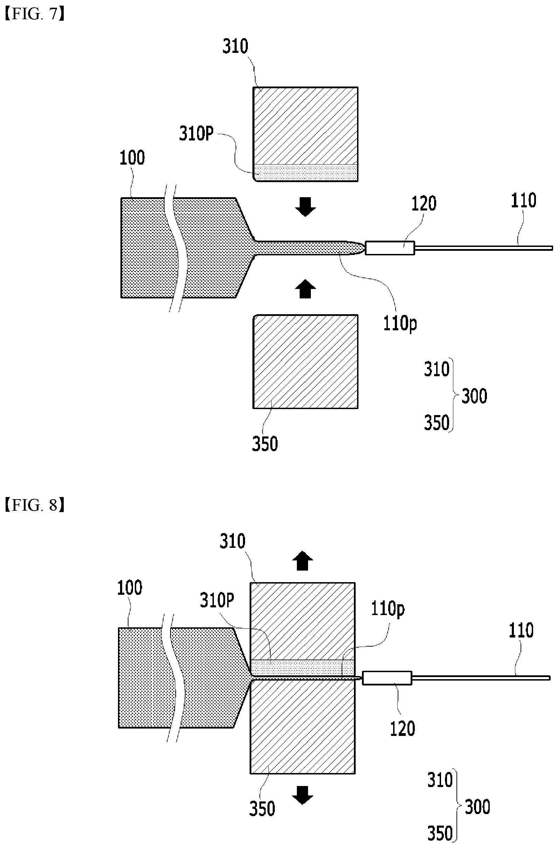

Additionally, referring to Figs. 7 and 8, the first jig 310 and the second jig 350 can move again to the pressed pocket part 110p and press the pocket part 110p again. Here, the remaining part of the electrolyte contained in the pocket part 110p may move toward the inside of the battery case 100. If necessary, as shown in Figs. 7 and 8, the pressing and releasing of the pocket part 110p can be repeated several times according to the movement of the first jig 310 and the second jig 350.

Thereby, in the battery cell manufacturing device according to an embodiment of the present disclosure, the jig 300 can allow the electrolyte contained in the pocket part 110p to move toward the inside of the battery case 100 and thus, can reduce the amount of electrolyte loss in the battery case 100. Further, the jig 300 may be repeatedly pressed and released on the pocket part 110p, whereby the electrolyte remaining in the pocket part 110p can be minimized, and the quality of the battery cell can be further improved.

Fig. 9 is a diagram showing a battery cell after the pressing step of Fig. 4. Fig. 10 is a diagram showing a battery cell after the sealing step of Fig. 4.

Referring to Figs. 9 and 10, in the battery cell manufacturing device according to another embodiment of the present disclosure, the above-mentioned battery cell manufacturing device may further include a sealing tool 500 together with the jig 300.

Here, the sealing tool 500 includes a first sealing tool 510 located at the upper part and a second sealing tool 550 located at the lower part, with respect to the pocket part 110p. Here, the first sealing tool 510 and the second sealing tool 550 can heat-seal at least a part of the pocket part 110p pressed by the jig 300 to form a sealing part 150 on the outer peripheral surface 110 of the battery case 100.

Thereby, in the battery cell manufacturing device according to an embodiment of the present disclosure, the sealing tool 500 can allow the battery case 100 to be sealed in a state in which the electrolyte contained in the pocket part 110p located between the pre-sealing part 130 and the sealing part 150 is minimized. That is, the battery case 100 can reduce the amount of electrolyte loss and improve the quality of the battery cell.

Further, the first sealing tool 510 and the second sealing tool 550 may be formed of the same material and shape. However, the present disclosure is not limited thereto, and can be appropriately deformed according to the shape of the battery case 100.

Further, the first sealing tool 510 and the second sealing tool 550 may each perform upward and downward movements. As another example, one of the first sealing tool 510 and the second sealing tool 550 is fixed in contact with the pocket portion 110p, and the remaining one can perform upward and downward movements. However, the present disclosure is not limited thereto, and can be appropriately deformed according to the shape of the battery case 100.

Further, the width of the sealing tool 500 may be equal to or smaller than the width of the jig 300. As an example, with respect to the pocket portion 110p, the sealing tool 500 can be disposed adjacently at a position close to the inside of the battery case 100.

Thereby, in the battery cell manufacturing device according to an embodiment of the present disclosure, the sealing tool 500 can allow the sealing part 150 to form at a position close to the inside of the battery case 100 in the pocket part 110p, whereby a part of the electrolyte in the battery case 100 can be prevented from being leaked to the outer peripheral surface 110 of the battery case 100 in the subsequent charging/discharging process of the battery cell, and the quality of the battery cell can also be improved.

Referring to Fig. 4, a battery cell manufacturing method according to another embodiment of the present disclosure is a battery cell manufacturing method comprising a battery case 100 in which an electrode assembly and an electrolyte solution are incorporated, the method comprising: a pre-sealing step (S100), a pressing step (S200) and a sealing step (S300).

Referring to Figs. 4 and 5, the pre-sealing step (S100) may be a step of forming the pre-sealing part 120 on the outer peripheral surface 110 of the battery case 100. Here, the pre-sealing part 120 may be formed by heat-sealing the upper and lower parts of the outer peripheral surface 110 of the battery case 100 using a pre-sealing tool (not shown).

Thereby, in the battery cell manufacturing method according to an embodiment of the present disclosure, a part of the outer peripheral surface 110 of the battery case 100 is sealed by the pre-sealing step (S100), so that the electrolyte in the battery case 100 cannot be leaked to the outside.

Additionally, the pre-sealing part 120 may be formed at a position spaced apart from the inside of the battery case 100 by a predetermined distance even on the outer peripheral surface 110 of the battery case 100. Particularly, on the outer peripheral surface of the battery case 100, a pocket part 110p may be formed between the inside of the battery case 100 and the pre-sealing part 120. Here, the pocket part 110p may include at least a part of the electrolyte in the battery case 100, as described above.

Referring to Figs. 4, and 6 to 8, the pressing step (S200) may be a step in which pressing is performed on the pocket part 110p of the outer peripheral surface 110 of the battery case 100. More specifically, the pressing step (S200) can be performed by the above-mentioned first jig 310 and second jig 350. Further, in the pressing step (S200), the pressing and releasing of the first jig 310 and the second jig 350 to the pocket part 110p can be repeated at least once.

Thereby, in the battery cell manufacturing method according to an embodiment of the present disclosure, at least a part of the electrolyte contained in the pocket part 110p can move toward the inside of the battery case 100 by the pressing step (S200).

As an example, the pressing step (S200) may be repeated until the thickness of the pocket part 110p is similar to the thickness of the end part of the outer peripheral surface 110 of the battery case 100. Here, the thickness of the end part of the outer peripheral surface 110 of the battery case 100 may mean the total thicknesses of the pouch film of the upper case and the pouch film of the lower case constituting the battery case 100. However, the time point at which the repetition of the pressing step (S200) ends is not limited thereto, and can be appropriately adjusted according to the production model and the process conditions of the battery cell 100.

Thereby, in the battery cell manufacturing method according to an embodiment of the present disclosure, the pressing step (S200) can be repeated until reaching the above-described thickness, and the electrolyte contained in the pocket part 110p can be sufficiently moved into the battery case 100. That is, the electrolyte remaining in the pocket part 110p can be minimized, and the quality of the battery cell can also be further improved.

Further, referring to Figs. 4, 9, and 10, a sealing step (S300) can be performed after the pressing step (S200). Here, in the sealing step (S300) may be a step in which at least a part of the pocket part 110p is heat-sealed by the above-mentioned sealing tool 500 to form the sealing part 150 on the outer peripheral surface of the battery case.

Thereby, in the battery cell manufacturing method according to an embodiment of the present disclosure, the sealing step (S300) can heat-seal the pocket part 110p in a state in which the electrolyte contained in the pocket part 110p is minimized. That is, in the sealing step (S300), the battery case 100 can be sealed with the sealing part 150 in a state in which the amount of electrolyte loss inside the battery case 100 is reduced, thereby further improving the quality of the battery cell.

Fig. 11 is a diagram showing a modification of the battery cell manufacturing device shown in Fig. 5.

Referring to Fig. 11, in the jig 300 of the present embodiment, at least one of the first jig 310 and the second jig 350 has a surface in contact with the pocket part 110p that is covered with a soft member 310P. At this time, the bottom part of the soft member 310P' facing the pocket part 110p may have a structure in which the thickness changes. The soft member (310P') bottom part may have a first end part (P1) and a second end part (P2), and the thickness of the soft member 310P' increases as it goes from the first end part P1 adj acent to the pre-sealing part 200 toward the second end part P2 farther from the pre-sealing part 200 relative to the first end part P1.

By having a structure in which the thickness of the bottom portion of the soft member 310P in contact with the pocket part 110p according to the present embodiment changes, in particular, a structure in which the thickness decreases as it moves away from the pre-sealing part 200, the electrolyte can be moved much more efficiently toward the inside of the battery case 100 at the time of pressing the pocket part 110p. Thereby, the electrolyte remaining in the pocket part 110p can be minimized, and the quality of the battery cell can be further improved.

Although the preferred embodiments of the present disclosure have been shown and described above, the scope of the present disclosure is not limited thereto, and numerous changes and modifications can be devised by those skilled in the art using the principles of the invention defined in the appended claims, which also falls within the spirit and scope of the present disclosure.

### [Description of Reference Numerals]

100: battery case
110: outer peripheral surface of battery case
110p: pocket part
120: pre-sealing part
150: sealing part
300: jig
500: sealing tool

## Claims

1. A battery cell manufacturing device comprising a battery case in which an electrode assembly and an electrolyte are incorporated, with a pocket part and a pre-sealing part being formed on the outer peripheral surface of the battery case, and the device comprising a jig for pressing the pocket part,
wherein the jig includes a first jig located at the upper part and a second jig located at the lower part with respect to the pocket part, and
wherein pressing and releasing of the first jig and the second jig to the pocket part are repeated at least once to press the pocket part.

2. The battery cell manufacturing device of claim 1, wherein:
the jig is extended along the pocket part.

3. The battery cell manufacturing device of claim 2, wherein:
a width of the jig is equal to or smaller than a length of the pocket part.

4. The battery cell manufacturing device of claim 1, wherein:
at least one of the first jig and the second jig has a surface in contact with the pocket part that is covered with a soft member.

5. The battery cell manufacturing device of claim 4, wherein:
the soft member is formed of a POM (polyoxymethylene) pad.

6. The battery cell manufacturing device of claim 4, wherein:
the soft member bottom part facing the pocket part has a structure in which the thickness changes.

7. The battery cell manufacturing device of claim 6, wherein:
the soft member bottom part has a first end part and a second end part, and
the thickness of the soft member decreases as it goes from the first end part adjacent to the pre-sealing part toward the second end part farther from the pre-sealing part relative to the first end part.

8. The battery cell manufacturing device of claim 1,
which further comprises a sealing tool including a first sealing tool located at an upper part and a second sealing tool located at a lower part, with respect to the pocket part,
wherein the sealing tool heat-seals at least a part of the pocket part pressed by the jig to form a sealing part on the outer peripheral surface of the battery case.

9. The battery cell manufacturing device of claim 1, wherein:
a width of the sealing tool is equal to or smaller than a length of the jig.

10. A battery cell manufacturing method comprising a battery case in which an electrode assembly and an electrolyte are incorporated, the method comprising:
a pre-sealing step of forming a pocket part and a pre-sealing part on the outer peripheral surface of the battery case; and
a pressing step of pressing and bonding the pocket part with a jig,
wherein the jig includes a first jig located at the upper part and a second jig located at the lower part, with respect to the pocket part, and
wherein in the pressing step, pressing and releasing of the first jig and the second jig to the pocket part are repeated at least once.

11. The battery cell manufacturing method of claim 10, wherein:
the pressing step is repeated until the thickness of the pocket part is similar to the thickness of the end part of the outer peripheral surface of the battery case.

12. The battery cell manufacturing method of claim 10, wherein:
which further comprises a sealing step that is performed after the pressing step,
wherein in the sealing step, at least a part of the pocket part is heat-sealed by a sealing tool to form a sealing part on the outer peripheral surface of the battery case.
